# EUROPEAN PATENT APPLICATION

(11) **EP 4 712 533 A1**
(43) Date of publication of application: **18.03.2026**
(21) Application number: 23936887.1
(22) Date of filing: 12.05.2023
(51) Int. Cl.: H04W 12/069

(54) **REQUEST PROCESSING METHOD AND DEVICE**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2023/094074
(87) International publication number: WO 2024/234197

(57) **Abstract**

Disclosed in embodiments of the present application are a request processing method and device, which can be applied to the technical field of communications. The method comprises: upon receipt of a first request satisfying a first condition, a first entity can reject the first request, wherein the first condition is that the first request carries a first resource owner identifier and does not carry a token; or the first condition is that the first request carries the first resource owner identifier and carries a token which does not comprise the resource owner identifier. In this way, malicious API callers are prevented from requesting to access, without the authorization of resource owners, resources of the resource owners by means of the first request, thereby improving the security of resource access.

## Description

### TECHNICAL FIELD

The present disclosure relates to a field of wireless communication technologies, and in particular, to a method and an apparatus for processing a request.

### BACKGROUND

In a common application programming interface framework (CAPIF), there are two authorization mechanisms. One of the authorization mechanisms is based on a transport layer security pre-shared key (TLS-PSK)/public key infrastructure (PKI), and a token in this authorization mechanism does not include a resource owner identity (ID). The other authorization mechanism is in a subscriber-aware northbound application programming interface access (SNA) scenario, and a token in this authorization mechanism does include a resource owner ID.

In a case where the two authorization mechanisms are used together, a malicious application programming interface (API) invoker may bypass authorization of a resource owner, and request a first entity to authorize an access to a resource of any resource owner via a traditional token or the authorization mechanism based on the traditional TLS-PSK/PKI, so as to request an access to the resource of the resource owner and reduce the resource access security.

### SUMMARY

Embodiments of the present disclosure provide a method and an apparatus for processing a request, which may be applied to a field of wireless communication technology. When receiving a first request that satisfies a first condition, a first entity may reject the first request, in which the first condition is that the first request carries a first resource owner ID and does not carry a token; or the first condition is that the first request carries a first resource owner ID and carries a token that does not include a resource owner ID, so as to avoid a malicious application programming interface (API) invoker from bypassing authorization of a resource owner via the first request to request an access to a resource of the resource owner, and thereby improving the resource access security.

According to a first aspect, embodiments of the present disclosure provide a method for processing a request, performed by a first entity, including: in response to receiving a first request that satisfies a first condition, determining to perform rejection processing on the first request, in which the first condition is that the first request carries a first resource owner ID and does not carry a token; or the first condition is that the first request carries a first resource owner ID and carries a token that does not include a resource owner ID.

In the embodiment of the present disclosure, when receiving the first request that satisfies the first condition, the first entity may reject the first request, in which the first condition is that the first request carries the first resource owner ID and does not carry the token; or the first condition is that the first request carries the first resource owner ID and carries the token that does not include the resource owner ID, so as to avoid the malicious API invoker from bypassing the authorization of the resource owner via the first request and request an access to the resource of the resource owner, and thereby improving the resource access security.

In an implementation, the method further includes: returning a first response to an API invoker that initiates the first request, in which the first response indicates rejection of a request from the API invoker for a resource corresponding to the first resource owner ID.

In an implementation, the first request further includes at least one of: an ID of the API invoker that initiates the first request; an ID of a service requested by the API invoker; an ID of an API requested by the API invoker; or an ID of a resource requested by the API invoker.

In an implementation, the first entity is a network exposure function (NEF) network element or an API exposing function (AEF) network element in a common application programming interface framework (CAPIF).

In an implementation, the resource owner ID is a generic public subscription identity (GPSI) of a resource owner.

In an implementation, the API invoker that initiates the first request is a terminal that requests a resource corresponding to the first resource owner ID.

In an implementation, at least two authorization mechanisms are used by the first entity simultaneously; and the authorization mechanisms include: a traditional transport layer security pre-shared key (TLS-PSK)/public key infrastructure (PKI)-based authorization mechanism, and an authorization mechanism in a subscriber-aware northbound application programming interface access (SNA) scenario.

According to a second aspect, embodiments of the present disclosure provide another method for processing a request, performed by an API invoker, including: sending a first request to a first entity; and receiving a first response returned by the first entity when the first request satisfies a first condition, in which the first response indicates a rejection of the first request, in which the first condition is that the first request carries a first resource owner ID and does not carry a token; or the first condition is that the first request carries a first resource owner ID and carries a token that does not include a resource owner ID.

In the embodiment of the present disclosure, when the first request that satisfies the first condition, the API invoker may receive a response returned by the first entity indicating the rejection of the first request, in which the first condition is that the first request carries the first resource owner ID and does not carry the token; or the first condition is that the first request carries the first resource owner ID and carries the token that does not include the resource owner ID, so as to avoid the malicious API invoker from bypassing the authorization of the resource owner via the first request to request an access to the resource of the resource owner, and thereby improving the resource access security.

In an implementation, the first request further includes at least one of: an ID of the API invoker that initiates the first request; an ID of a service requested by the API invoker; an ID of an API requested by the API invoker; or an ID of a resource requested by the API invoker.

In an implementation, the first entity is a NEF network element or an AEF network element in a CAPIF.

In an implementation, the resource owner ID is a GPSI of a resource owner.

In an implementation, the API invoker that initiates the first request is a terminal that requests a resource corresponding to the first resource owner ID.

In an implementation, at least two authorization mechanisms are used by the first entity simultaneously; and the authorization mechanisms include: a traditional TLS-PSK/PKI-based authorization mechanism, and an authorization mechanism in an SNA scenario.

According to a third aspect, embodiments of the present disclosure provide a communication apparatus. The communication apparatus has some or all of functions of the first entity in the method described in the above first aspect, such as functions of the communication apparatus may have some or all of functions in the embodiments of the present disclosure, or may have functions of implementing any one of the embodiments of the present disclosure independently. The functions may be realized by hardware, or by executing corresponding software using hardware. The hardware or software includes one or more units or modules corresponding to the above functions.

In an implementation, a structure of the communication apparatus may include a transceiver unit and a processing unit. The processing unit is configured to support the communication apparatus to perform corresponding functions in the above method. The transceiver unit is configured to support communication between the communication apparatus and other devices. The communication apparatus may also include a storage unit for coupling with the transceiver unit and the processing unit. The storage module stores a computer program and data necessary for the communication apparatus.

As an example, the processing unit may be a processor, the transceiver unit may be a transceiver or a communication interface, and the storage unit may be a memory.

According to a fourth aspect, embodiments of the present disclosure provide a communication apparatus. The communication apparatus has some or all of functions of the API invoker in the method described in the above second aspect, such as functions of the communication apparatus may have some or all of functions in the embodiments of the present disclosure, or may have functions of implementing any one of the embodiments of the present disclosure independently. The functions may be realized by hardware, or by executing corresponding software using hardware. The hardware or software includes one or more units or modules corresponding to the above functions.

In an implementation, a structure of the communication apparatus may include a transceiver unit and a processing unit. The processing unit is configured to support the communication apparatus to perform corresponding functions in the above method. The transceiver unit is configured to support communication between the communication apparatus and other devices. The communication apparatus may also include a storage unit for coupling with the transceiver unit and the processing unit. The storage unit stores computer programs and data necessary for the communication apparatus.

As an example, the processing unit may be a processor, the transceiver unit may be a transceiver or a communication interface, and the storage unit may be a memory.

According to a fifth aspect, embodiments of the present disclosure provide a communication device. The communication device includes a processor. When a computer program in a memory is called by the processor, the method described in the above first aspect is implemented.

According to a sixth aspect, embodiments of the present disclosure provide a communication device. The communication device includes a processor. When a computer program in a memory is called by the processor, the method described in the above second aspect is implemented.

According to a seventh aspect, embodiments of the present disclosure provide a communication device. The communication device includes a processor and a memory for storing a computer program. When the computer program stored in the memory is executed by the processor, the communication device is caused to implement the method in the above first aspect.

According to an eighth aspect, embodiments of the present disclosure provide a communication device. The communication device includes a processor and a memory for storing a computer program. When the computer program stored in the memory is executed by the processor, the communication device is caused to implement the method in the above second aspect.

According to a ninth aspect, embodiments of the present disclosure provide a communication device. The communication device includes a processor and an interface circuit, in which the interface circuit is configured to receive code instructions and transmit the code instructions to the processor; and the processor is configured to run the code instructions to cause the communication device to implement the method in the above first aspect.

According to a tenth aspect, embodiments of the present disclosure provide a communication device. The communication device includes a processor and an interface circuit, in which the interface circuit is configured to receive code instructions and transmit the code instructions to the processor; and the processor is configured to run the code instructions to cause the communication device to implement the method in the above second aspect.

According to an eleventh aspect, embodiments of the present disclosure provide a communication system. The system includes the communication apparatus in the third aspect and the communication apparatus in the fourth aspect, or the communication device in the fifth aspect and the communication device in the sixth aspect, or the communication device in the seventh aspect and the communication device in the eighth aspect, or the communication device in the ninth aspect and the communication device in the tenth aspect.

According to a twelfth aspect, embodiments of the present disclosure provide a computer-readable storage medium for storing instructions used by the above first entity. When the instructions are executed, the first entity is caused to implement the method in the above first aspect.

According to a thirteenth aspect, embodiments of the present disclosure provide a readable storage medium for storing instructions used by the above API invoker. When the instructions are executed, the API invoker is caused to implement the method in the above second aspect.

According to a fourteenth aspect, embodiments of the present disclosure provide a computer program product including a computer program. When the computer program product is running on a computer, the computer is caused to implement the method in the above first aspect.

According to a fifteenth aspect, embodiments of the present disclosure provide a computer program product including a computer program. When the computer program product is running on a computer, the computer is caused to implement the method in the above second aspect.

According to a sixteenth aspect, embodiments of the present disclosure provide a chip system. The chip system includes at least one processor and at least one interface, configured to support the first entity to perform functions described in the first aspect, for example, to determine or process at least one of data and information in the above method. In a possible design, the chip system also includes a memory for saving computer programs and data necessary for the terminal. The chip system may include a chip, or a chip and other discrete devices.

According to a seventeenth aspect, embodiments of the present disclosure provide a chip system. The chip system includes at least one processor and at least one interface, configured to support the API invoker to perform functions described in the second aspect, for example, to determine or process at least one of data and information in the above method. In a possible design, the chip system also includes a memory for saving computer programs and data necessary for the API invoker. The chip system may include a chip, or a chip and other discrete devices.

According to an eighteenth aspect, embodiments of the present disclosure provide a computer program. When the computer program is running on a computer, the computer is caused to implement the method in the above first aspect.

According to a nineteenth aspect, embodiments of the present disclosure provide a computer program. When the computer program is running on a computer, the computer is caused to implement the method in the above second aspect.

### BRIEF DESCRIPTION OF THE DRAWINGS

In order to more clearly illustrate the technical solutions in embodiments of the disclosure or the background, the accompanying drawings to be used in embodiments of the disclosure or the background are described below.
FIG. 1 is a schematic diagram of an architecture of a communication system according to an embodiment of the present disclosure.
FIG. 2 is a schematic flowchart of a method for processing a request according to an embodiment of the present disclosure.
FIG. 3 is a schematic flowchart of another method for processing a request according to an embodiment of the present disclosure.
FIG. 4 is a schematic diagram of an interaction of a method for processing a request according to an embodiment of the present disclosure.
FIG. 5 is a block diagram of a communication apparatus according to an embodiment of the present disclosure.
FIG. 6 is a block diagram of another communication device according to an embodiment of the present disclosure.
FIG. 7 is a block diagram of a chip according to an embodiment of the present disclosure.

### DETAILED DESCRIPTION

In order to better understand the method and the apparatus for processing a request disclosed by the embodiments of the present disclosure, a communication system applicable to the embodiments of the present disclosure is first described below.

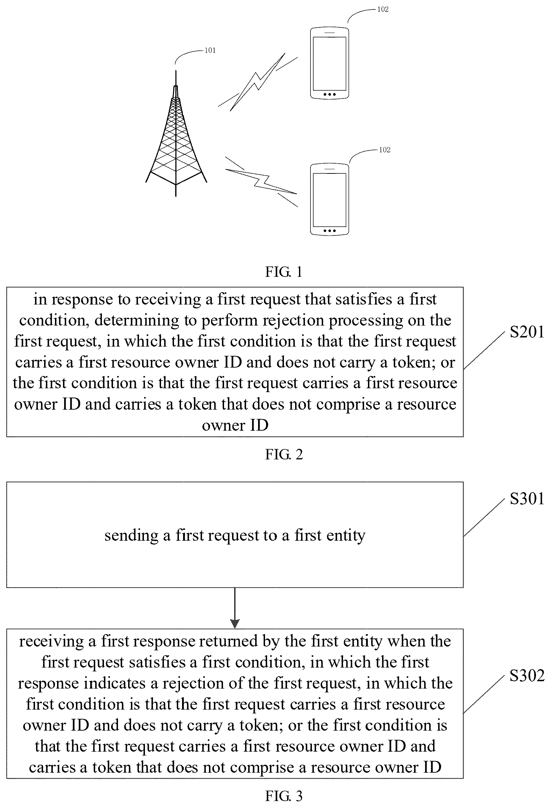

Refer to FIG. 1, FIG. 1 is a schematic diagram of an architecture of a communication system according to an embodiment of the present disclosure. The communication system may include, but is not limited to, one network device and one terminal. The number and form of devices in FIG. 1 are only shown as an example, and do not constitute a limitation on the embodiments of the present disclosure. The communication system may include two or more network devices and two or more terminals in a practical application. The communication system in FIG. 1 including one network device 101 and one terminal 102 is shown as an example.

It needs to be noted that the technical solutions of the embodiments of the present disclosure may be applied to various communication systems, for example, a long term evolution (LTE) system, a 5th generation (5G) mobile communication system, a 5G new radio (NR) system, or other new mobile communication systems in the future.

The network device 101 in the embodiments of the present disclosure is an entity on a network side for sending or receiving signals. For example, the network device 101 may be an evolved NodeB (eNB), a transmission reception point (TRP), a next generation NodeB (gNB) in an NR system, a base station in other future mobile communication systems, an access node in a wireless networking (Wi-Fi^{™}) system, or a non-access node in the communication system. The non-access node may be, for example, an API exposing function (AEF) network element in a common application programming interface framework (CAPIF), a network exposure function (NEF) network element in the CAPIF, a CAPIF core function (CCF) network element in the CAPIF, and so on. The embodiments of the present disclosure do not limit a specific technology and a specific device form used by the network device.

The terminal 102 in the embodiments of the present disclosure is an entity on a user side for receiving or sending signals, such as a mobile phone. The terminal may also be called a terminal device, a user equipment (UE), a mobile station (MS), a mobile terminal (MT), and the like. The terminal may be a car with a communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, and the like. The embodiments of the present disclosure do not limit a specific technology and a specific device form used by the terminal. An API invoker mentioned in the present disclosure is the terminal.

In the CAPIF, there are two authorization mechanisms. One authorization mechanism is a traditional TLS-PSK/PKI-based authorization mechanism, and a token in this authorization mechanism does not include a resource owner identity (ID). The other authorization mechanism is an authorization mechanism in a subscriber-aware northbound application programming interface access (SNA) scenario, and a token in this authorization mechanism includes a resource owner ID.

One of objectives of studying SNA security is obtaining authorization from a resource owner. A corresponding stage 1 requirement, in TS 22.261 clause 6.10.2, states that "allow the UE to provide/revoke consent for information (e.g., location, presence) to be shared with the third-party".

In the SNA scenario, to access resources (e.g., location information, QoS information) belonging to a specific resource owner, the API invoker needs to interact with the CCF using an authorization code grant type and a client credentials grant type. For both grant types, the CCF needs to leverage authorization information/policies of resource owners to generate tokens for the API invoker. The AEF authorizes the API invoker to access the resources belonging to the specific resource owner if and only if the token contains a corresponding API invoker ID and the resource owner ID.

However, a malicious API invoker may still bypass the authorization of the resource owner. In specific, the malicious API invoker applies for a token by not triggering the authorization code grant type or by not triggering an client credential grant type with participation of the resource owner, the CCF sends the malicious API invoker a traditional token without the resource owner ID or indicates the API invoker to use the traditional TLS-PSK/PKI-based authorization mechanism.

For a malicious API invoker that receives the traditional token, the malicious API invoker sends an API invocation request including the API invoker ID, a requested API ID, the resource owner ID, and the traditional token to the AEF. Since the token does not contain resource owner ID, the AEF authorizes the malicious API invoker to access resources of any resource owner via a requested API.

For a malicious API invoker that is indicated to access the resources via the traditional TLS-PSK/PKI-based authorization mechanism, the malicious API invoker sends the API invocation request including the API invoker ID, the requested API ID, the resource owner ID to the AEF. For the traditional TLS-PSK/PKI-based authorization mechanism, the AEF gets authorization information, which is not related to a specific resource owner, from the CCF using the API invoker ID. Therefore, the AEF authorizes the malicious API invoker to access the resources of any resource owner via the requested API.

In a case where the two authorization mechanisms are used simultaneously, the malicious API invoker may bypass the authorization of the resource owner, and request a first entity to authorize an access to the resources of any resource owner via the traditional token or the traditional TLS-PSK/PKI-based authorization mechanism, thus requesting the access to the resources of the resource owner, and reducing the resource access security.

It may be understood that the communication system in the embodiments of the present disclosure is to more clearly explain the technical solutions of the embodiments of the present invention, and does not constitute a limitation on the technical solutions in the embodiments of the present invention. Those skilled in the art may know that with evolution of the system architecture and emergence of new service scenarios, the technical solutions in the embodiments of the present disclosure is equally applicable to similar technical problems.

It needs to be noted that the first entity described in any embodiment of the present disclosure is a device for performing rejection processing on a received first request that satisfies a first condition, for example, the network device 101 in the communication system shown in FIG. 1. The API invoker described in any embodiment of the present disclosure is a device for sending a first request to the first entity, for example, the terminal 102 in the communication system shown in FIG. 1.

It needs to be noted that the method for processing a request in any one of the embodiments of the present disclosure may be performed independently, or in combination with a possible implementation in other embodiments, or in combination with any one of technical solutions in the related art.

The method and the apparatus for processing a request provided by the present disclosure are described in detail below with reference to accompanying drawings.

Referring to FIG. 2, FIG. 2 is a schematic flowchart of a method for processing a request according to an embodiment of the present disclosure. The method for processing a request is performed by a first entity. As shown in FIG. 2, the method may include but is not limited to a following step at S201.

At S201, in response to receiving a first request that satisfies a first condition, it is determined to perform rejection processing on the first request, in which the first condition is that the first request carries a first resource owner ID and does not carry a token; or the first condition is that the first request carries a first resource owner ID and carries a token that does not include a resource owner ID.

In the embodiments of the present disclosure, at least two authorization mechanisms are used by the first entity simultaneously; and the authorization mechanisms may include: a traditional TLS-PSK/PKI-based authorization mechanism, and an authorization mechanism in an SNA scenario. In a case where the at least two authorization mechanisms are used by the first entity simultaneously, S201 may be executed. In a case where only a single authorization mechanism is used by the first entity, the first entity may not receive the first request that satisfies the first condition; or, for a received first request that satisfies the first condition, the received first request is processed according to the single authorization mechanism.

In the embodiments of the present disclosure, the first request may be initiated by an API invoker that requests a resource of a resource owner, and sent to the first entity. The resource owner is, for example, an end user, a subscriber, a human, and the like. The resource of the resource owner is, for example, a location of the resource owner, a QoS, and the like, which may be set according to an actual need.

The API invoker is a terminal that requests a resource corresponding to the first resource owner ID. For example, the API invoker may be a terminal used by a third party that needs to request and process the resource.

In the embodiments of the present disclosure, the first entity may be an NEF network element or an AEF network element in a CAPIF. In one example, the AEF network element and the NEF network element may be located on different network devices. In another example, the AEF network element and the NEF network element may be located on a same network device.

In the embodiments of the present disclosure, the resource owner ID may be a GPSI of the resource owner. The GPSI may uniquely identify the resource owner.

In the embodiments of the present disclosure, the first request may further include at least one of: an ID of an API invoker that initiates the first request; an ID of a service requested by the API invoker; an ID of an API requested by the API invoker; or an ID of a resource requested by the API invoker. Taking the resource of the resource owner being UE reachability information of the user as an example, the ID of the API may be MonitoringEvent; the ID of the resource may be UE reachability of the first resource owner. The CAPIF/NEF may include a plurality of APIs, and the ID of the API requested by the API invoker here is the ID of the API used when the API invoker initiates the first request.

In the embodiments of the present disclosure, taking an example where the first request further includes the ID of the API invoker that initiates the first request and the ID of the API requested by the API invoker, in a case that the first condition is that the first request carries the first resource owner ID and does not carry the token, the first request that satisfies the first condition may include: the first resource owner ID, the ID of the API invoker that initiates the first request, and the ID of the API requested by the API invoker.

In this example, the first request does not carry a token, it may be that the API invoker does not apply for a token. That is to say, when the API invoker requests authorization from the CCF, the CCF indicates the API invoker to use the traditional TLS-PSK/PKI-based authorization mechanism. That is to say, the API invoker at this time bypasses authorization of the resource owner. Therefore, the first entity may determine that the first request initiated by the API invoker is initiated by a malicious API invoker bypassing the authorization of the resource owner, and needs to perform the rejection processing on the first request to prevent the API invoker from successfully obtaining the resource of the resource owner while bypassing the authorization of the resource owner.

In this example, a token that is not carried in the first request may refer to a token that does not include the resource owner ID, or may refer to a token that includes the resource owner ID.

In the embodiments of the present disclosure, taking an example where the first request further includes the ID of the API invoker that initiates the first request and the ID of the API requested by the API invoker, in a case that the first condition is that the first request carries the first resource owner ID and carries the token that does not include the resource owner ID, the first request that satisfies the first condition may include: the first resource owner ID, the token that does not include the resource owner ID, the ID of the API invoker that initiates the first request, and the ID of the API requested by the API invoker.

In this example, if the first request carries the token that does not include the resource owner ID, it may be that the API invoker does not obtain a token that carries the resource owner ID. For example, when the API invoker requests a token from the CCF, the API invoker applies for the token by not triggering an authorization code grant type or by not triggering a client credential grant type with participation of the resource owner. At this time the CCF sends a token that does not include the resource owner ID to the API invoker (for example, the CCF sends the token to the API invoker using a client credential grant type without participation of the resource owner). That is to say, the API invoker at this time bypasses the authorization of the resource owner. Therefore, the first entity may determine that the first request initiated by the API invoker is initiated by the malicious API invoker bypassing the authorization of the resource owner, and needs to perform the rejection processing on the first request to prevent the API invoker from successfully obtaining the resource of the resource owner while bypassing the authorization of the resource owner.

In the embodiments of the present disclosure, the first entity may also receive a second request that does not satisfy the first condition. The second request may further include at least one of: an ID of an API invoker that initiates the second request; an ID of a service requested by the API invoker; an ID of an API requested by the API invoker; or an ID of a resource requested by the API invoker.

Taking an example where the second request further includes the ID of the API invoker that initiates the second request and the ID of the API requested by the API invoker, in one example, the second request may include: the first resource owner ID, the token that includes the resource owner ID, the ID of the API invoker that initiates the second request, and the ID of the API requested by the API invoker. In this example, if the token includes the first resource owner ID, it indicates that when the API invoker requests the token from the CCF, the CCF send the token that includes the first resource owner ID to the API invoker using the authorization code grant type or the client credential grant type with the participation of the resource owner. That is to say, the API invoker at this time passes the authorization of the resource owner. Therefore, for the second request initiated by the API invoker, the first entity may authorize the API invoker to access a resource of a resource owner corresponding to the first resource owner ID. If the second request further includes the ID of the service requested by the API invoker, the first entity may authorize the API invoker to access a resource under the service of the resource owner corresponding to the first resource owner ID.

Taking an example where the second request further includes the ID of the API invoker that initiates the second request and the ID of the API requested by the API invoker, in another example, the second request may include: a token that does not include the first resource owner ID, the ID of the API invoker that initiates the second request, and the ID of the API requested by the API invoker. In this example, if the token does not include the first resource owner ID, and the second request does not carry the first resource owner ID, it indicates that when the API invoker requests the authorization from the CCF, the CCF sends the token that does not include the resource owner ID to the API invoker. Therefore, for the second request initiated by the API invoker, the first entity may authorize the API invoker to access an API agreed in the token that does not include the first resource owner ID. If the second request further includes the ID of the service requested by the API invoker, the first entity may authorize the API invoker to access a service agreed in the token that does not include the first resource owner ID.

In the embodiments of the present disclosure, after S201, the first entity may further execute a following process: returning a first response to the API invoker that initiates the first request, in which the first response indicates a rejection of a request from the API invoker for a resource corresponding to the first resource owner ID.

In the embodiments of the present disclosure, the first response further indicates the API invoker to initiate authorization with participation of the resource owner, that is, to indicate the API invoker to interact with the CCF to obtain a token that includes the resource owner ID. Correspondingly, the API invoker may, according to an instruction of the first response, interact with the CCF to obtain the token that includes the resource owner ID; and then, in combination with the token, initiate the second request that does not satisfy the first condition, to obtain a resource corresponding to the resource owner ID.

In addition, if the first entity receives the second request that does not satisfy the first condition and determines to perform authorization processing on the second request, the first entity may obtain the resource requested by the API invoker, carry the resource in a second response, and return the second response to the API invoker.

In the method for processing a request provided in the embodiments of the present disclosure, when receiving the first request that satisfies the first condition, the first entity may perform the rejection processing on the first request, in which the first condition is that the first request carries the first resource owner ID and does not carry the token; or the first condition is that the first request carries the first resource owner ID and carries the token that does not include the resource owner ID, to avoid the malicious API invoker from bypassing the authorization of the resource owner via the first request to request an access to the resource of the resource owner, and to improve the resource access security.

Referring to FIG. 3, FIG. 3 is a schematic flowchart of another method for processing a request according to an embodiment of the present disclosure. The method for processing a request is performed by an API invoker. As shown in FIG. 3, the method may include but is not limited to following steps at S301 to S302.

At S301, a first request is sent to a first entity.

In the embodiments of the present disclosure, at least two authorization mechanisms are used by the first entity simultaneously; and the authorization mechanisms include: a traditional TLS-PSK/PKI-based authorization mechanism, and an authorization mechanism in an SNA scenario. In a case where the at least two authorization mechanisms are used by the first entity simultaneously, the API invoker may execute S301 and S302. In a case where a single authorization mechanism is used by the first entity, the API invoker may only perform S301.

In the embodiments of the present disclosure, the first request may be initiated by an API invoker that requests a resource of a resource owner, and sent to the first entity. The resource owner is, for example, an end user, a subscriber, a human, and the like. A resource of the resource owner is, for example, a location of the resource owner, a QoS, and the like, which may be set according to an actual need.

The API invoker is a terminal that requests a resource corresponding to a first resource owner ID. For example, the API invoker may be a terminal used by a third party that needs to request and process the resource.

In the embodiments of the present disclosure, the first entity may be an NEF network element or an AEF network element in a CAPIF. In one example, the AEF network element and the NEF network element may be located on different network devices. In another example, the AEF network element and the NEF network element may be located on a same network device.

At S302, a first response returned by the first entity when the first request satisfies a first condition is received, in which the first response indicates a rejection of the first request, in which the first condition is that the first request carries a first resource owner ID and does not carry a token; or the first condition is that the first request carries a first resource owner ID and carries a token that does not include a resource owner ID.

In the embodiments of the present disclosure, the resource owner ID may be a GPSI of the resource owner. The GPSI may uniquely identify the resource owner.

In the embodiments of the present disclosure, the first request may further include at least one of: an ID of the API invoker that initiates the first request; an ID of a service requested by the API invoker; an ID of an API requested by the API invoker; or an ID of a resource requested by the API invoker. Taking the resource of the resource owner being UE reachability information of the user as an example, the ID of the API may be MonitoringEvent; the ID of the resource may be UE reachability of a first resource owner. The CAPIF/NEF may include a plurality of APIs, and the ID of the API requested by the API invoker here is the ID of the API used when the API invoker initiates the first request.

In the embodiments of the present disclosure, taking an example where the first request further includes the ID of the API invoker that initiates the first request and the ID of the API requested by the API invoker, in a case that the first condition is that the first request carries the first resource owner ID and does not carry the token, the first request that satisfies the first condition may include: the first resource owner ID, the ID of the API invoker that initiates the first request, and the ID of the API requested by the API invoker.

In this example, if the first request does not carry a token, it may be that the API invoker does not apply for a token. That is to say, when the API invoker requests authorization from a CCF, the CCF indicates the API invoker to use the traditional TLS-PSK/PKI-based authorization mechanism. That is to say, the API invoker at this time bypasses authorization of the resource owner. Therefore, after the API invoker initiates the first request and sends the first request to the first entity, the API invoker may receive the first response that indicates the rejection of the first request.

In this example, a token that is not carried in the first request may refer to a token that does not include the resource owner ID, or may refer to a token that includes the resource owner ID.

In the embodiments of the present disclosure, taking an example where the first request further includes the ID of the API invoker that initiates the first request and the ID of the API requested by the API invoker, in a case that the first condition is that the first request carries the first resource owner ID and carries the token that does not include the resource owner ID, the first request that satisfies the first condition may include: the first resource owner ID, the token that does not include the resource owner ID, the ID of the API invoker that initiates the first request, and the ID of the API requested by the API invoker.

In this example, if the first request carries the token that does not include the resource owner ID, it may be that the API invoker does not obtain a token that carries the resource owner ID. For example, when the API invoker requests a token from the CCF, the API invoker applies for the token by not triggering the authorization code grant type or by not triggering the client credential grant type with participation of the resource owner, at this time the CCF sends a token that does not include the resource owner ID to the API invoker (for example, the CCF sends the token to the API invoker using a client credential grant type without the participation of the resource owner). That is to say, the API invoker at this time bypasses the authorization of the resource owner. Therefore, after the API invoker initiates the first request and sends the first request to the first entity, the API invoker may receive the first response that indicates the rejection of the first request.

In the embodiments of the present disclosure, the first entity may also receive a second request that does not satisfy the first condition. The second request may further include at least one of: an ID of an API invoker that initiates the second request; an ID of a service requested by the API invoker; an ID of an API requested by the API invoker; an ID of a resource requested by the API invoker.

Taking an example where the second request further includes the ID of the API invoker that initiates the second request and the ID of the API requested by the API invoker, in one example, the second request may include: the first resource owner ID, the token that includes the resource owner ID, the ID of the API invoker that initiates the second request, and the ID of the API requested by the API invoker. In this example, if the token includes the first resource owner ID, it indicates that when the API invoker requests a token from the CCF, the CCF sends the token that includes the first resource owner ID to the API invoker by using the authorization code grant type or the client credential grant type with the participation of the resource owner. That is to say, the API invoker at this time passes the authorization of the resource owner. Therefore, after the API invoker initiates the second request and sends the second request to the first entity, the API invoker may receive a second response that includes a requested resource.

Taking an example where the second request further includes the ID of the API invoker that initiates the second request and the ID of the API requested by the API invoker, in another example, the second request may include: a token that does not include the first resource owner ID, the ID of the API invoker that initiates the second request, and the ID of the API requested by the API invoker. In this example, if the token does not include the first resource owner ID, and the second request does not carry the first resource owner ID, it indicates that when the API invoker requests the authorization from the CCF, the CCF sends the token that does not include the resource owner ID to the API invoker. Therefore, after the API invoker initiates the second request and sends the second request to the first entity, the first entity may authorize the API invoker to access an API agreed in the token that does not include the first resource owner ID, and the API invoker may receive a second response that includes a requested resource. If the second request further includes the ID of the service requested by the API invoker, the first entity may authorize the API invoker to access a service agreed in the token that does not include the first resource owner ID, and the API invoker may receive the second response that includes the requested resource.

In the embodiments of the present disclosure, the first response further indicates the API invoker to initiate authorization with participation of the resource owner, that is, to indicate the API invoker to interact with the CCF to obtain a token that includes the resource owner ID. Correspondingly, the API invoker may, according to an instruction of the first response, interact with the CCF to obtain the token that includes the resource owner ID; and then, in combination with the token, initiate the second request that does not satisfy the first condition, to obtain a resource corresponding to the resource owner ID.

In the method for processing a request provided in the embodiments of the present disclosure, the API invoker sends the first request to the first entity; receives the first response returned by the first entity when the first request satisfies the first condition, in which the first response indicates the rejection of the first request, in which the first condition is that the first request carries the first resource owner ID and does not carry the token; or the first condition is that the first request carries the first resource owner ID and carries the token that does not include the resource owner ID, to avoid the malicious API invoker from bypassing the authorization of the resource owner via the first request to request an access to the resource of the resource owner, and to improve the resource access security.

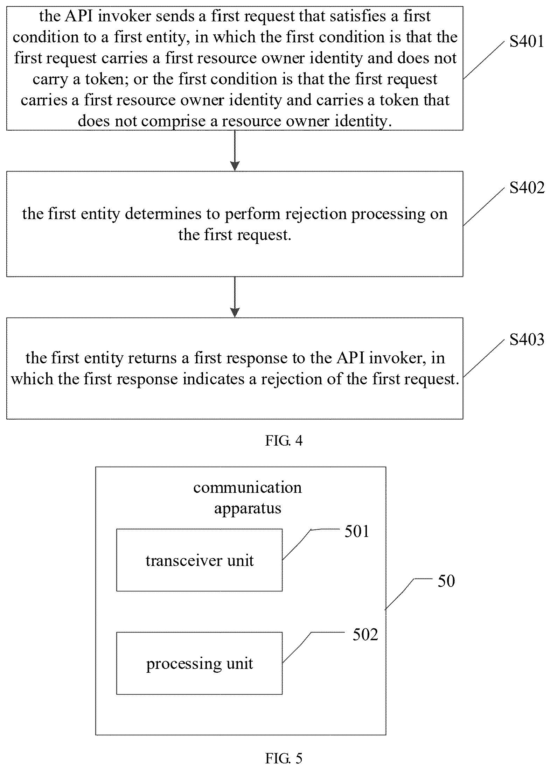

Referring to FIG. 4, FIG. 4 is a schematic diagram of an interaction of a method for processing a request according to an embodiment of the present disclosure. As shown in FIG. 4, the method may include but is not limited to following steps at S401 to S403.

At S401, an API invoker sends a first request that satisfies a first condition to a first entity, in which the first condition is that the first request carries a first resource owner ID and does not carry a token; or the first condition is that the first request carries a first resource owner ID and carries a token that does not include a resource owner ID.

In the embodiments of the present disclosure, at least two authorization mechanisms are used by the first entity simultaneously; and the authorization mechanisms include: a traditional TLS-PSK/PKI-based authorization mechanism, and an authorization mechanism in an SNA scenario.

In the embodiments of the present disclosure, a resource owner is, for example, an end user, a subscriber, a human, and the like. A resource of the resource owner is, for example, a location of the resource owner, a QoS, and the like, which may be set according to an actual need. In the embodiments of the present disclosure, the resource owner ID may be a GPSI of the resource owner. The GPSI may uniquely identify the resource owner.

In the embodiments of the present disclosure, the first entity may be an NEF network element or an AEF network element in a CAPIF. In one example, the AEF network element and the NEF network element may be located on different network devices. In another example, the AEF network element and the NEF network element may be located on a same network device.

In the embodiments of the present disclosure, the first request may further include at least one of: an ID of an API invoker that initiates the first request; an ID of a service requested by the API invoker; an ID of an API requested by the API invoker; or an ID of a resource requested by the API invoker.

At S402, the first entity determines to perform rejection processing on the first request.

In the embodiments of the present disclosure, in one example, when the first condition is that the first request carries the first resource owner ID and does not carry a token, the first request may carry the first resource owner ID and not carry a token. The first request not carrying a token may be that the API invoker does not apply for a token. That is to say, when the API invoker requests authorization from a CCF, the CCF indicates the API invoker to use the traditional TLS-PSK/PKI-based authorization mechanism. That is to say, the API invoker at this time bypasses authorization of the resource owner. Therefore, the first entity may determine that the first request initiated by the API invoker is initiated by a malicious API invoker bypassing the authorization of the resource owner, and needs to perform the rejection processing on the first request to prevent the API invoker from successfully obtaining the resource of the resource owner while bypassing the authorization of the resource owner.

In the embodiments of the present disclosure, in another example, when the first condition is that the first request carries the first resource owner ID and carries a token that does not include the resource owner ID, the first request may carry the first resource owner ID and carry the token that does not include the resource owner ID. The first request carrying the token that does not include the resource owner ID may be that the API invoker does not obtain a token obtain that carries the resource owner ID. For example, when the API invoker requests a token from the CCF, the API invoker applies for the token by not triggering the authorization code grant type or by not triggering the client credential grant type with participation of the resource owner, at this time the CCF sends the token that does not include the resource owner ID to the API invoker (for example, the CCF sends the token to the API invoker using a client credential grant type without the participation of the resource owner). That is to say, the API invoker at this time bypasses the authorization of the resource owner. Therefore, the first entity may determine the first request initiated by the API invoker is initiated by the malicious API invoker bypassing the authorization of the resource owner, and needs to perform the rejection processing on the first request to prevent the API invoker from successfully obtaining the resource of the resource owner while bypassing the authorization of the resource owner.

At S403, the first entity returns a first response to the API invoker, in which the first response indicates a rejection of the first request.

In the embodiments of the present disclosure, the first response further indicates the API invoker to initiate authorization with the participation of the resource owner, that is, to indicate the API invoker to interact with the CCF to obtain a token that includes the resource owner ID. Correspondingly, the API invoker may, according to an instruction of the first response, interact with the CCF to obtain the token that includes the resource owner ID; and then, in combination with the token, initiate a second request that does not satisfy the first condition, to obtain a resource corresponding to the resource owner ID.

In the method for processing a request provided in the embodiments of the present disclosure, the API invoker sends the first request that satisfies the first condition to the first entity, in which the first condition is that the first request carries the first resource owner ID and does not carry the token; or the first condition is that the first request carries the first resource owner ID and carries the token that does not include the resource owner ID; and the first entity determines to perform the rejection processing on the first request, and returns the first response to the API invoker, in which the first response indicates the rejection of the first request, to avoid the malicious API invoker from bypassing the authorization of the resource owner via the first request to request an access to the resource of the resource owner, and to improve the resource access security.

The following provides specific examples of the method for processing a request of the present disclosure described above.
1a. The API invoker sends an API invocation request including an API invoker ID, a service API name, a resource owner ID (e.g., GPSI), and a traditional token to the AEF/NEF.
1b. The API invoker sends the API invocation request including the API invoker ID, the service API name, and the resource owner ID (e.g., GPSI) to the AEF/NEF.
2a. In case of receiving a traditional token that does not include resource owner ID, if the API invocation request contains the resource owner ID, the AEF/NEF should reject the request. Otherwise, the AEF/NEF should authorize the API invocation request based on the token.
2b. In case of receiving an API invocation request without the token, if the request includes the resource owner ID, the AEF/NEF should reject the API request. Otherwise, the AEF/NEF should authorize the request based on information requested by the CCF using the API invoker ID.
3. The AEF/NEF sends an API invocation response to the API invoker.

In the above embodiments provided by the present disclosure, the methods provided by the embodiments of the present disclosure are introduced from perspectives of the first entity and the API invoker, respectively. To realize various functions in the methods provided by the embodiments of the present disclosure, the first entity and the API invoker may include a hardware structure, a software module, or a combination of a hardware structure and a software module to implement the above functions. A specific function among the above functions may be executed by means of the hardware structure, the software module, or the combination of the hardware structure and the software module.

Referring to FIG. 5, FIG. 5 is a block diagram of a communication device 50 according to an embodiment of the present disclosure. The communication apparatus 50 shown in FIG. 5 may include a transceiver unit 501 and a processing unit 502. The transceiver unit 501 may include a sending unit and/or a receiving unit. The sending unit is configured to perform a sending function. The receiving unit is configured to perform a receiving function. The transceiver unit 501 may perform the sending function and/or the receiving function.

The communication apparatus 50 may be a terminal (such as the API invoker in the above method embodiments), or an apparatus in a terminal, or an apparatus that may be used in combination with a terminal. Or, the communication apparatus 50 may be a network device (such as the first entity in the above method embodiments), or an apparatus in a network device, or an apparatus that may be used in combination with a network device.

When the communication apparatus 50 is the network device (such as the first entity in the above method embodiments):
the processing unit 502 is configured to, in response to receiving a first request that satisfies a first condition, determine to perform rejection processing on the first request, in which the first condition is that the first request carries a first resource owner ID and does not carry a token; or the first condition is that the first request carries a first resource owner ID and carries a token that does not include a resource owner ID.

Optionally, the transceiver unit 501 is configured to return a first response to an API invoker that initiates the first request, in which the first response indicates a rejection of a request from the API invoker for a resource corresponding to the first resource owner ID.

Optionally, the first request further includes at least one of: an ID of the API invoker that initiates the first request; an ID of a service requested by the API invoker; an ID of an API requested by the API invoker; or an ID of a resource requested by the API invoker.

Optionally, the first entity is an NEF network element or an AEF network element in a CAPIF.

Optionally, the resource owner ID is a GPSI of a resource owner.

Optionally, the API invoker that initiates the first request is a terminal that requests the resource corresponding to the first resource owner ID.

Optionally, at least two authorization mechanisms are used by the first entity simultaneously; and the authorization mechanisms include: a traditional TLS-PSK/PKI-based authorization mechanism, and an authorization mechanism in an SNA scenario.

When the communication apparatus 50 is a terminal (such as the API invoker in the above method embodiments):
the transceiver unit 501 is configured to send a first request to a first entity; and receive a first response returned by the first entity when the first request satisfies a first condition, in which the first response indicates a rejection of the first request, in which the first condition is that the first request carries a first resource owner ID and does not carry a token; or the first condition is that the first request carries a first resource owner ID and carries a token that does not include a resource owner ID.

Optionally, the first request further includes at least one of: an ID of the API invoker that initiates the first request; an ID of a service requested by the API invoker; an ID of an API requested by the API invoker; or an ID of a resource requested by the API invoker.

Optionally, the first entity is an NEF network element or an AEF network element in a CAPIF.

Optionally, the resource owner ID is a GPSI of a resource owner.

Optionally, the API invoker that initiates the first request is a terminal that requests a resource corresponding to the first resource owner ID.

Optionally, at least two authorization mechanisms are used by the first entity simultaneously; and the authorization mechanisms include: a traditional TLS-PSK/PKI-based authorization mechanism, and an authorization mechanism in an SNA scenario.

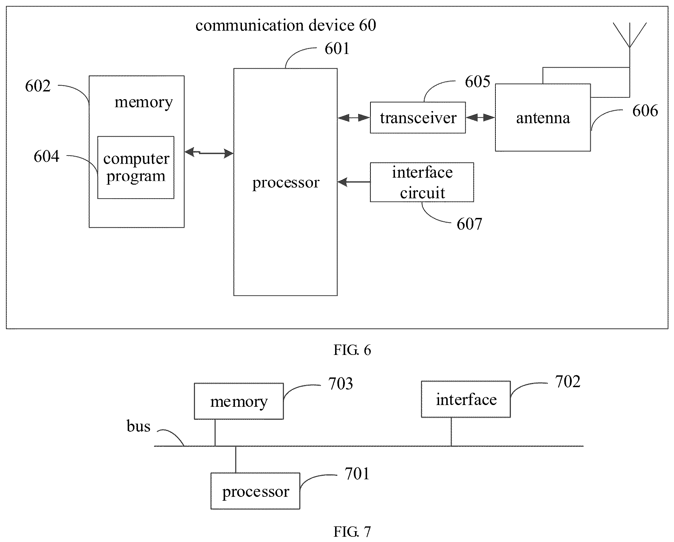

Referring to FIG. 6, FIG. 6 is a block diagram of another communication device 60 according to an embodiment of the present disclosure. The communication device 60 may be a network device (such as the first entity in the above method embodiments), or a terminal (such as the API invoker in the above method embodiments), or a chip, a chip system, or a processor that supports the network device to implement the above method, or a chip, a chip system, or a processor that supports the terminal to implement the above method. The device may be used to implement the method described in the above method embodiments, and specific reference may be made to the description in the above method embodiments.

The communication device 60 may include one or more processors 601. The processor 601 may be a general-purpose processor or a dedicated processor, etc. For example, it may be a baseband processor or a central processor. The baseband processor may be used to process a communication protocol and communication data, and the central processor may be used to control the communication device (such as a base station, a baseband chip, a terminal, a terminal chip, a DU, or a CU, etc.), execute a computer program, and process data of the computer program.

Optionally, the communication device 60 may also include one or more memories 602 on which a computer program 604 is stored. When the computer program 604 is executed by the processor 601, the communication device 60 implements the method in the above method embodiments. Optionally, the memory 602 may also store data. The communication device 60 and the memory 602 may be set separately or integrated together.

Optionally, the communication device 60 may also include a transceiver 605 and an antenna 606. The transceiver 605 may be referred to as a transceiving unit, a transceiver set, or a transceiving circuit, etc., is configured to achieve a transceiving function. The transceiver 605 may include a receiver and a transmitter. The receiver may be called a receiver or a receiving circuit, etc., is configured to achieve a receiving function. The transmitter may be called a transmitter or a transmitting circuit, etc., is configured to implement a transmitting function.

Optionally, the communication device 60 includes one or more interface circuits 607. The interface circuit 607 is configured to receive code instructions and transmit the code instructions to the processor 601. When the code instructions are running on the processor 601, the communication device 60 is caused to implement the method in the above method embodiments.

When the communication device is the network device (such as the first entity in the above method embodiments), the processor 601 is configured to execute S201.

When the communication apparatus 60 is the terminal (such as the API invoker in the above method embodiments), the transceiver 605 is configured to execute S301 and S302 in FIG. 3.

In an implementation, the processor 601 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit/convey signals.

In an implementation, the processor 601 may store a computer program 603. When the computer program 603 is running on the processor 601, the communication device 60 is caused to implement the method in the above method embodiments. The computer program 603 may be solidified in the processor 601. In this way, the processor 601 may be implemented in hardware.

In an implementation, the communication device 60 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured using various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal (such as the first entity in the above method embodiments), but the scope of the communication device in the present disclosure is not limited to this, and the structure of the communication device may not be restricted by FIG. 6. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For a case where the communication device may be a chip or a chip system, refer to FIG. 7, which is a block diagram of a chip. The chip in FIG. 7 includes a processor 701 and an interface 702. There may be one or more processors 701, and one or more interfaces 702.

For a case where the chip is configured to implement the functions of the network device (such as the first entity in the above method embodiments) in the embodiments of the present disclosure,
the interface 702 is configured to return a first response to an API invoker that initiates the first request, in which the first response indicates a rejection of a request from the API invoker for a resource corresponding to the first resource owner ID.

Optionally, the first request further includes at least one of: an ID of the API invoker that initiates the first request; an ID of a service requested by the API invoker; an ID of an API requested by the API invoker; or an ID of a resource requested by the API invoker.

Optionally, the first entity is an NEF network element or an AEF network element in a CAPIF.

Optionally, a resource owner ID is a GPSI of a resource owner.

Optionally, the API invoker that initiates the first request is a terminal that requests the resource corresponding to the first resource owner ID.

Optionally, at least two authorization mechanisms are used by the first entity simultaneously; and the authorization mechanisms include: a traditional TLS-PSK/PKI-based authorization mechanism, and an authorization mechanism in an SNA scenario.

For a case where a chip is configured to implement the functions of the terminal (such as the API invoker in the above method embodiments) in the embodiments of the present disclosure,
the interface 702 is configured to send a first request to the first entity; and receive a first response returned by the first entity when the first request satisfies a first condition, in which the first response indicates a rejection of the first request, in which the first condition is that the first request carries a first resource owner ID and does not carry a token; or the first condition is that the first request carries a first resource owner ID and carries a token that does not include a resource owner ID.

Optionally, the first request further includes at least one of: an ID of the API invoker that initiates the first request; an ID of a service requested by the API invoker; an ID of an API requested by the API invoker; or an ID of a resource requested by the API invoker.

Optionally, the first entity is an NEF network element or an AEF network element in a CAPIF.

Optionally, the resource owner ID is a GPSI of a resource owner.

Optionally, the API invoker that initiates the first request is a terminal that requests a resource corresponding to the first resource owner ID.

Optionally, at least two authorization mechanisms are used by the first entity simultaneously; and the authorization mechanisms include: a traditional TLS-PSK/PKI-based authorization mechanism, and an authorization mechanism in an SNA scenario.

Optionally, the chip further includes a memory 703 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above functions, but such implementation shall not be regarded as going beyond the scope of the protection of the embodiments of the present disclosure.

The embodiment of the present disclosure also provides a communication system, which includes the communication device as a terminal (such as the API invoker in the above method embodiments) and the communication device as a network device (such as the first entity in the above method embodiments) in the embodiment of FIG. 5, or the system includes the communication device as a terminal (such as the API invoker in the above method embodiments) and the communication device as a network device (such as the first entity in the above method embodiments) in the embodiment of FIG. 6.

The present disclosure also provides a readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, functions may be wholly or partially implemented by software, hardware, firmware, or any combination of them. When implemented by software, the functions may be implemented wholly or partially in the form of a computer program product. The computer program product includes one or more computer programs. Procedures or functions according to the embodiments of the present disclosure are wholly or partially implemented when the computer program is loaded and executed on a computer. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one website, computer, server, or data center to another website, computer, server, or data center via a wire (such as a coaxial cable, a fiber optic, a digital subscriber line (DSL)) or wireless (such as infrared, wireless, microwave) manner. The computer-readable storage medium may be any available medium that may be accessed by a computer, or a data storage device such as a server, or a data center that integrates one or more of the available media. The available medium may be a magnetic medium (such as a floppy disk, a hard disk and a magnetic tape), an optical medium (such as a digital video disk (DVD)), a semiconductor medium (such as a solid-state disk (SSD)), or the like.

Those skilled in the art may understand that various numbers such as first and second involved in the present disclosure are distinguished merely for convenience of description, and are not intended to limit the scope of embodiments of the present disclosure, but also not to indicate an order of precedence.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Predefined in the present disclosure may be understood as defined, pre-defined, stored, pre-stored, pre-negotiated, pre-configured, solidified or pre-burned.

Those skilled in the related art may realize that units and algorithm steps of the examples described in embodiments of the present disclosure may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that for a specific working process of a system, an apparatus and a unit described above reference may be made to a corresponding process in the above method embodiments, which are not repeated here.

The above are only implementations of the disclosure. However, the protection scope of the disclosure is not limited here. Changes and substitutions that may be easily considered by those skilled in the art shall be included within the protection scope of the present disclosure. Therefore, the protection scope of the disclosure shall be subject to the protection scope of claims.

## Claims

1. A method for processing a request, performed by a first entity, comprising:
in response to receiving a first request that satisfies a first condition, determining to perform rejection processing on the first request,
wherein the first condition is that the first request carries a first resource owner identity (ID) and does not carry a token; or the first condition is that the first request carries a first resource owner ID and carries a token that does not comprise a resource owner ID.

2. The method of claim 1, further comprising:
returning a first response to an application programming interface (API) invoker that initiates the first request, wherein the first response indicates a rejection of a request from the API invoker for a resource corresponding to the first resource owner ID.

3. The method of claim 1 or 2, wherein the first request further comprises at least one of:
an ID of an application programming interface (API) invoker that initiates the first request;
an ID of a service requested by the API invoker;
an ID of an API requested by the API invoker; or
an ID of a resource requested by the API invoker.

4. The method of any one of claims 1 to 3, wherein the first entity is a network exposure function (NEF) network element or an API exposing function (AEF) network element in a common application programming interface framework (CAPIF).

5. The method of any one of claims 1 to 4, wherein the resource owner ID is a generic public subscription identity (GPSI) of a resource owner.

6. The method of any one of claims 1 to 4, wherein an application programming interface (API) invoker that initiates the first request is a terminal that requests a resource corresponding to the first resource owner ID.

7. The method of any one of claims 1 to 5, wherein at least two authorization mechanisms are used by the first entity simultaneously; and the authorization mechanisms comprise: a traditional transport layer security pre-shared key (TLS-PSK)/public key infrastructure (PKI)-based authorization mechanism, and an authorization mechanism in a subscriber-aware northbound application programming interface access (SNA) scenario.

8. A method for processing a request, performed by an application programming interface (API) invoker, comprising:
sending a first request to a first entity; and
receiving a first response returned by the first entity when the first request satisfies a first condition, wherein the first response indicates rejection of the first request;
wherein the first condition is that the first request carries a first resource owner identity (ID) and does not carry a token; or the first condition is that the first request carries a first resource owner ID and carries a token that does not comprise a resource owner ID.

9. The method of claim 8, wherein the first request further comprises at least one of:
an ID of the API invoker that initiates the first request;
an ID of a service requested by the API invoker;
an ID of an API requested by the API invoker; or
an ID of a resource requested by the API invoker.

10. The method of claim 8 or 9, wherein the first entity is a network exposure function (NEF) network element or an API exposing function (AEF) network element in a common application programming interface framework (CAPIF).

11. The method of any one of claims 8 to 10, wherein the resource owner ID is a generic public subscription identity (GPSI) of a resource owner.

12. The method of any one of claims 8 to 10, wherein the API invoker that initiates the first request is a terminal that requests a resource corresponding to the first resource owner ID.

13. The method of any one of claims 8 to 10, wherein at least two authorization mechanisms are used by the first entity simultaneously; and the authorization mechanisms comprise: a traditional transport layer security pre-shared key (TLS-PSK)/public key infrastructure (PKI)-based authorization mechanism, and an authorization mechanism in a subscriber-aware northbound application programming interface access (SNA) scenario.

14. A communication apparatus, arranged in a first entity, comprising:
a processing unit, configured to, in response to receiving a first request that satisfies a first condition, determine to perform rejection processing on the first request,
wherein the first condition is that the first request carries a first resource owner identity (ID) and does not carry a token; or the first condition is that the first request carries a first resource owner ID and carries a token that does not comprise a resource owner ID.

15. A communication apparatus, arranged in an application programming interface (API) invoker, comprising:
a transceiver unit, configured to send a first request to a first entity; and
the transceiver unit is further configured to receive a first response returned by the first entity when the first request satisfies a first condition, wherein the first response indicates a rejection of the first request;
wherein the first condition is that the first request carries a first resource owner identity (ID) and does not carry a token; or the first condition is that the first request carries a first resource owner ID and carries a token that does not comprise a resource owner ID.

16. A communication device, comprising a processor and a memory for storing a computer program that, when executed by the processor, cause the communication device to implement the method of any one of claims 1 to 7.

17. A communication device, comprising a processor and a memory for storing a computer program that, when executed by the processor, cause the communication device to implement the method of any one of claims 8 to 13.

18. A communication device, comprising:
a processor; and
an interface circuit,
wherein the interface circuit is configured to receive code instructions and transmit the code instructions to the processor; and
the processor is configured to run the code instructions to implement the method of any one of claims 1 to 7.

19. A communication device, comprising:
a processor; and
an interface circuit,
wherein the interface circuit is configured to receive code instructions and transmit the code instructions to the processor; and
the processor is configured to run the code instructions to implement the method of any one of claims 8 to 13.

20. A computer-readable storage medium for storing instructions that, when executed, the method of any one of claims 1 to 7 is implemented.

21. A computer-readable storage medium for storing instructions that, when executed, the method of any one of claims 8 to 13 is implemented.
